# EUROPÄISCHE PATENTSCHRIFT

(11) **EP 1 318 931 B1**
(45) Veröffentlichungstag und Bekanntmachung des Hinweises auf die Patenterteilung: **08.12.2004**
(21) Anmeldenummer: 01985225.0
(22) Anmeldetag: 20.09.2001
(51) Int. Cl.: B60S 9/08

(54) **MOTORBETRIEBENE STÜTZWINDE FÜR SATTELAUFLIEGER**
MOTOR-OPERATED SEMITRAILER LANDING GEAR FOR SEMITRAILERS
BRAS D'APPUI MOTORISES POUR SEMI-REMORQUES

(30) Priorität: 20.09.2000 DE 10046848
(43) Veröffentlichungstag der Anmeldung: 18.06.2003
(73) Patentinhaber: Jost-Werke GmbH & Co. KG, 60528 Frankfurt am Main (DE)
(72) Erfinder: ALGÜERA GALLEGO, José Manuel, 63739 Aschaffenburg (DE)
(74) Vertreter: Fuchs Mehler Weiss & Fritzsche
(86) Internationale Anmeldenummer: PCT/EP2001/010886
(87) Internationale Veröffentlichungsnummer: WO 2002/024499

(56) Entgegenhaltungen:
- WO-A-00/51859
- DE-A- 3 143 713
- US-B1- 6 250 650
- PATENT ABSTRACTS OF JAPAN vol. 016, no. 325 (M-1280), 15. Juli 1992 (1992-07-15) & JP 04 092753 A (FUJITSU LTD), 25. März 1992 (1992-03-25)

## Beschreibung

Die Erfindung betrifft eine Vorrichtung zur Abstützung von Sattelaufliegern mit wenigstens einer teleskopartig ein- und ausfahrbaren Stützwinde, einen auf das lastfreie Verfahren der Stützwinde abgestimmten Motor und einer Steuer- und Regeleinheit, die einen elektronischen Rechner und Datenspeicher umfaßt und für die Aufnahme und Verarbeitung von Signalen sowie zur Erzeugung und Ausgabe von Steuersignalen ausgebildet ist.

Aus der EP 0 529 544 B1 ist ein Sattelzug mit motorisch angetriebener Abstützvorrichtung bekannt geworden. Dabei ist der motorische Antrieb für die Abstützvorrichtung des Sattelaufliegers leistungsmäßig auf das Verstellen der Abstützvorrichtung im unbelasteten Zustand beschränkt. Die Verwendung eines derartigen Antriebes ist möglich, weil die Zugmaschine mit einer Luftfederung ausgestattet ist, die eine Höhenverstellung der Sattelplatte relativ zur Hinterachse der Zugmaschine ermöglicht. Beim Abkoppeln des Sattelaufliegers kann die Sattelplatte entweder aus der normalen, durch die Last des Sattelaufliegers definierten oder aus einer demgegenüber erhöhten Position abgesenkt werden, nachdem die Abstützvorrichtung des Sattelaufliegers ausgefahren ist und Bodenkontakt erreicht hat. Beim Ankoppeln des Sattelaufliegers kann die Sattelplatte aus einer abgesenkten Position mittels der Luftfederung soweit angehoben werden, daß die Last des Sattelaufliegers übernommen wird und die Stützvorrichtung praktisch lastfrei ist. Im Vergleich zu der früher üblichen Betätigung der Abstützvorrichtung mit Handkurbeln ist damit eine wesentliche Verbesserung erreicht, durch die die Bedienungsperson entlastet wird und die Kopplungsvorgänge rascher durchgeführt werden können.

Bei Zugmaschinen mit mechanischer Federung ist eine Höhenverstellung der Sattelplatte nicht möglich, so daß der motorische Antrieb für die Abstützvorrichtung des Sattelaufliegers zumindest so stark ausgelegt werden muß, daß der Sattelauflieger unter Mitbenutzung der Rückstellkräfte der mechanischen Federung der Zugmaschine soweit angehoben werden kann, daß die Sattelplatte störungsfrei ausgefahren werden kann. Die Sattelplatte an der Zugmaschine und das Gegenstück am Sattelauflieger sind - in Fahrtrichtung gesehen - von vorne nach hinten schräg abfallend ausgebildet, so daß eventuell vorhandene Restlasten beim Ausfahren nicht schlagartig auf die Abstützvorrichtung übertragen werden und beim Ankoppeln eine gegebenenfalls etwas zu niedrig eingestellte Rasthöhe des Sattelaufliegers überwunden werden kann. Will man das Übereinanderschieben der Sattelplatte der Zugmaschine und des Gegenstücks am Sattelauflieger unter Restlast bzw. wegen unzureichender Abstützhöhe vermeiden, muß man auf noch stärkere motorische Antriebe für die Abstützvorrichtung zurückgreifen, die für den maximal möglichen Lastanteil des Sattelaufliegers ausgelegt sind, der auf die Abstützvorrichtung entfällt.

Motorische Antriebe der beiden letztgenannten Kategorien sind im Vergleich zur Abstützvorrichtung selbst verhältnismäßig teuer, so daß derartig ausgestattete Abstützvorrichtungen praktisch nicht wettbewerbsfähig sind.

Auf der anderen Seite ist ein motorischer Antrieb für die Abstützvorrichtung von Sattelaufliegern, die in der Regel zusätzlich zu dem beibehaltenen Antrieb mit Handkurbel angeboten wird, ein Wettbewerbsvorteil, weil das Bedienungspersonal selbstverständlich gerne auf den damit verbundenen Komfort zurückgreift und daher vielfach die Kaufentscheidung zugunsten von Abstützvorrichtungen mit motorischem Antrieb beeinflußt. Für den Verkaufserfolg und die Akzeptanz am Markt kommt es aber weiterhin darauf an, daß Abstützvorrichtungen für Sattelauflieger mit dem leistungsmäßig kleinstmöglichen motorischen Antrieb äußerst preisgünstig angeboten werden können. Man kann davon ausgehen, daß die Abstützvorrichtungen selbst, die meist ein äußeres mit dem Sattelauflieger fest verbundenes Teil und ein darin teleskopartig verschiebbares inneres Teil mit Stützfuß sowie eine Spindel mit Spindelmutter umfassen, konstruktiv und preislich im wesentlichen ausgereift sind. Das gilt auch für den Antrieb mittels Handkurbel, der üblicherweise zwei Getriebestufen aufweist, die einmal das lastfreie Aus- und Einfahren und zum anderen das Verfahren unter Last erlauben. Für den aus Komfortgründen erwünschten leistungsmäßig kleinstmöglichen motorischen Antrieb muß daher ebenfalls scharf kalkuliert werden, so daß praktisch handelsüblich elektrische Motoren in Betracht kommen.

Ausgehend von dieser Situation liegt der Erfindung die Aufgabe zugrunde, eine Vorrichtung der eingangs genannten Art vorzuschlagen, die mit geringstmöglichen konstruktivem und kostenmäßigem Aufwand zu der gewünschten Komfortverbesserung führt, ohne daß es zu einer Überlastung des an der Stützwinde angeordneten Motors kommt.

Zur Lösung dieser Aufgabe wird vorgeschlagen, daß dem elektrischen Motor ein Signalerzeuger zugeordnet ist, daß der Signalerzeuger an die Steuer- und Regeleinheit angeschlossen ist, daß die Steuer- und Regeleinheit zur Verarbeitung von Signalen des Signalerzeugers derart ausgebildet ist, daß eine beim Verfahren der Stützwinde ermittelte Ist-Kurve mit einer Soll-Kurve verglichen wird, und daß die Steuer- und Regeleinheit mit dem Motor verbunden ist.

Die Vorteile eines derartigen Regelkreises liegen darin, daß eine Erhöhung der zum Ausfahren der Stützwinde benötigten Kräfte bereits in einem sehr frühen Stadium erkannt und eine Überlastung des Motors vermieden wird. Der Zeitpunkt der Abschaltung des Motors wird innerhalb der Steuer- und Regeleinheit durch Berechnung der Abweichungen der Ist-Kurve von der Soll-Kurve ermittelt. Bei entsprechenden Abweichungen wirkt die Steuer- und Regeleinheit direkt auf die Steuerung des Motors, verhindert eine Erhöhung der Stromaufnahme und beugt dadurch einer Zerstörung des Motors vor.

In einer bevorzugten Ausführungsform weist der Signalerzeuger einen auf einer Welle des Motors oder eines dem Motor zugeordneten Getriebes angeordneten Geber mit zwei halbkreisförmig durch einen magnetischen Isolator getrennte halbkreisförmige Scheiben und dazu radial beabstandet zwei induktiv arbeitende Sensoren auf. Hierbei kann der Geber unmittelbar auf der Motorwelle oder einer Welle des Getriebes angebracht sein. Bei drehender Welle und somit drehendem Geber laufen die beiden magnetischen halbkreisförmigen Scheiben an den Sensoren vorbei, wodurch von den Sensoren ein Signal zu der Steuer- und Regeleinheit weitergeleitet wird. Im Falle einer wachsenden aufzunehmenden Last der Stützwinde verringert sich die Drehzahl des Motors und somit auch des Gebers, wodurch sich auch der von den Sensoren aufgenommene Signalverlauf ändert.

Zweckmäßigerweise ist die Steuer- und Regeleinheit zum Erkennen von Veränderungen eines Flankenwinkels und/oder Höhe und/oder Länge des Signals ausgebildet. Durch Veränderung der Motordrehzahl ändern sich die vorstehend genannten Parameter des Signalverlaufs.

In einer besonderen Ausführungsform sind die Sensoren in Umfangsrichtung asymmetrisch verteilt angeordnet. Dadurch ergibt sich die Möglichkeit bei der Auswertung des von den Sensoren erzeugten und der Steuer- und Regeleinheit zur Verfügung gestellten Signals, den Drehsinn des Motors zu erkennen und somit eine Aussage bezüglich der Verfahrrichtung der Stützwinde zu treffen.

Die Stützwinde weist vorzugsweise mechanische Endanschläge auf, zwischen denen die Soll-Kurve spezifisch für jede Stützwinde ermittelbar ist, indem die Anzahl von Signalen bis zum Stillstand des Motors bei Erreichen der Endanschläge gezählt und ein entsprechender Wert im Datenspeicher abgelegt wird. In regelmäßigen Abständen kann die Richtigkeit der Soll-Kurve überprüft und gegebenenfalls eine korrigierte Soll-Kurve durch Aufzeichnen des vollständigen Ausfahrweges systemimmanent erzeugt werden, wobei die Steuerund Regeleinheit mit einem Lern-Algorithmus ausgestattet sein kann.

In weiterer Ausbildung des Erfindungsgedankens ist vorgesehen, daß aus der Soll-Kurve unter Verwendung des Wertes für den maximalen Verfahrweg elektronische Endanschläge berechenbar sind, die zum Abschalten des Motors jeweils kurz vor Erreichen der mechanischen Endanschläge benutzbar sind. Dadurch wird erreicht, daß die Stützwinde insbesondere beim Einfahren nicht gegen den sogenannten harten oberen Anschlag fährt und es zu einem erhöhten Verschleiß kommt.

Vorzugsweise dreht bei Erreichen des oberen Endanschlages der Motor kurz in die entgegengesetzte Laufrichtung. Dieses beugt einem Festsitzen der Stützwinde vor.

Ferner kann man vorsehen, daß aus der Soll-Kurve Sicherheits- und Überlastabschaltwerte berechenbar und abspeicherbar sind, die zwischen dem Signal bei lastfreiem Betrieb und dem Signal des Motors bei Erreichen eines mechanischen Endanschlags liegen.

Da die Stromaufnahme des Motors außerdem von der Zähigkeit der im Antriebsstrang verwendeten Schmiermittel, d.h. temperaturabhängig ist, ist es weiterhin zweckmäßig, daß der Steuer- und Regeleinheit ein Temperatursensor zugeordnet ist, dessen Signal zur entsprechenden Veränderung der Sicherheitsund Überlast-Abschaltwerte nutzbar ist.

Man kann auch vorsehen, daß der elektronische Rechner und Datenspeicher zur Erstellung und Abspeicherung eines Betriebs-Protokolls ausgestattet ist, der unter anderem zur Erfassung des Anlieferungszustandes, zur Fehlerdiagnose und zur Ausgabe von Wartungsanzeigen geeignet ist.

Erfindungsgemäß kann ferner vorgesehen werden, daß die Steuer- und Regeleinheit mit wenigstens einer Schnittstelle zur Kommunikation mit anderen Steuerungs- und Überwachungssystemen ausgestattet ist.

Dabei ist es besonders vorteilhaft, wenn die Steuer- und Regeleinheit in Verbindung mit der Steuerungs- und Überwachungseinrichtung der Kupplung zwischen Sattelauflieger und Zugmaschine für das automatische An- und Abkoppeln ausgelegt ist.

Die erfindungsgemäße Ausstattung einer Abstützvorrichtung für Sattelauflieger mit elektromotorischem Antrieb ermöglicht es, die sonst erforderlichen Endschalter einschließlich zugehöriger Verkabelung einzusparen und die erfindungsgemäßen Vorrichtungen entsprechend billiger anbieten zu können. Die Entwicklung der elektronischen Rechner und Datenspeicher ist inzwischen soweit fortgeschritten, daß man alle vorstehend beschriebenen Funktionen und viele weitere ohne weiteres auf einem sehr preiswerten Mikrochip unterbringen kann. Auch die darüber hinaus benötigten Bauteile für die Steuer- und Regeleinheit fallen kostenmäßig kaum ins Gewicht, so daß gattungsmäßige Vorrichtungen ohne Wettbewerbsnachteil ohne weiteres erfindungsgemäß ausgestattet werden können, sofern nicht bereits eine Steuer- und Regeleinheit vorgesehen ist, die dann lediglich noch für einige zusätzliche Funktionen eingerichtet werden muß. Sofern eventuelle Mehraufwendungen nicht durch die Einsparung von Endschaltern kompensiert werden, kann auf die zusätzlichen Möglichkeiten zur Verbesserung des Komforts, zur Automatisierung der An- und Abkoppelvorgänge sowie zum Aufbau eines umfassenden Regelungs- und Überwachungssystems für komplette, aus Zugmaschine und Sattelauflieger bestehende Lastkraftwagen hingewiesen werden. Nachfolgend werden stichwortartig weitere Anwendungsaspekte für die erfindungsgemäße Vorrichtung angegeben. Die Ermittlung und Abspeicherung elektronischer Endanschläge hat den Vorteil, daß ohne weiteres nicht nur unterschiedlich lange Stützwinden geeicht werden können, sondern auch daß Toleranzen bei der Herstellung der Spindeln und Stützteile bei der Ermittlung der elektronischen Endanschläge ohne weiteres berücksichtigt werden. Bei der Ermittlung von Sicherheits- und Überlast-Abschaltwerten kann in gleicher Weise auf herstellungsbedingte Leicht- bzw. Schwergängigkeit des Antriebsstranges eingegangen werden, so daß zur Auslösung eines Schaltvorgangs sehr kleine Soll-Ist-Abweichungen vorgegeben und somit sehr feinfühlig auf Signaländerungen eingegangen werden kann. Dabei ist es selbstverständlich, daß die Steuer- und Regeleinheit entweder auf Knopfdruck oder periodisch selbsttätig neue Sollwerte ermittelt und abspeichert, um gegebenenfalls verschleißbedingte Änderungen der Stromaufnahme berücksichtigen zu können oder nach einem Austausch des Antriebsmotors oder anderer Teile an der Stützwinde eine Neueichung vornehmen zu können.

Neben der Ermittlung und Abspeicherung elektronischer Endanschläge hat die Detektierung des Bodenkontaktes bei Abstützvorrichtungen von Sattelaufliegern eine erhebliche Bedeutung. Die erfindungsgemäß leistungsschwach ausgelegten Motoren vertragen nur geringfügige Überlastungen und müssen daher schnellstmöglich abgeschaltet werden, wenn der zu überwindende Widerstand ein vorgebbares Maß überschreitet. Dabei kann man den Fall "Bodenkontakt" von anderen Fällen mit erhöhter Stromaufnahme dadurch unterscheiden, daß man neben den elektronischen Endanschlägen die Ausfahrlängen bei Bodenkontakt abspeichert. Da über die mitgezählte Anzahl der Umdrehungen einer Welle im Antriebsstrang auch die jeweilige Ausfahrlänge zwischen den elektronischen Endanschlägen bekannt ist, kann eine erhöhte Stromaufnahme bei einer Ausfahrlänge, die sich deutlich von der Ausfahrlänge bei früheren Bodenkontakten unterscheidet, einer Störung wegen Verschleiß, Beschädigung oder Hindernis im Ausfahrweg zuordnen. Beispielsweise läßt sich die Kraft beim Ausfahren der Stützwinde auf einen sehr geringen Überlastwert begrenzen, um das Einklemmen der Füße eines Betreibers zu vermeiden. Dabei kann vorgesehen werden, daß die Drehrichtung des Motors automatisch umgekehrt wird, so daß der eingeklemmte Fuß befreit und aus dem Gefahrenbereich zurückgezogen werden kann.

Gleiches gilt selbstverständlich für andere unplanmäßige Hindernisse, die sich im Ausfahrweg der Stützwinde befinden können. Sind keine äußerlichen Hindernisse sichtbar, kann der Betreiber ohne weiteres auf innere Hindernisse, wie beispielsweise eine Beschädigung der Spindel oder der Spindelmutter schließen. Andererseits ist es ohne weiteres auch möglich, einen empfindlich eingestellten Sicherheits- oder Überlastwert zu überfahren, wenn unzweideutig klar ist, daß es sich um ein unschädliches Ausfahrhindernis handelt. Beispielsweise kann durch eine starke Änderung der Umgebungstemperatur die Zähigkeit der im Antriebsstrang verwendeten Schmiermittel relativ stark ansteigen, ohne daß die vorgesehene Temperaturkompensation der Sollwert bereits erfolgt ist oder falls eine solche Temperaturkompensation wegen eines defekten Temperaturfühlers nicht stattgefunden hat.

Schließlich kann die Steuer- und Regeleinheit über eine oder mehrere Schnittstellen mit anderen Regelungs- und Überwachungssystemen verbunden werden, um eine umfassende Automatisierung der An- und Abkoppelvorgänge zu realisieren. Dazu können entweder leitungsgebundende oder leitungsfreie Übertragungssysteme verwendet werden. Auf diese Weise kann der Komfort für das Bedienungspersonal noch weitgehend verbessert werden, ohne daß es bei der erfindungsgemäßen Vorrichtung weiterer Ausstattungskomponenten bedarf. So kann man beispielsweise sicherstellen, daß das Öffnen der Sattelkupplung nur dann möglich ist, wenn die Stützwinden Bodenkontakt haben. Andererseits kann das Wegfahren des Sattelzuges verhindert werden, wenn die Stützwinden noch ausgefahren sind oder die Sattelkupplung noch offen ist. Insoweit kann eine Kommunikation mit der Motorelektronik oder einem automatischen Bremssystem hergestellt werden.

Für das Rangieren auf Ladehöfen kann man andererseits vorsehen, daß der Sattelauflieger auch mit ausgefahrenen Stützwinden bewegt werden kann, wenn dazu der Sattelauflieger über die Luftfederung im vorderen Bereich entsprechend angehoben ist. Auch hier ist eine entsprechende Kommunikation erforderlich.

Ferner kann das unerwünschte Ausfahren der Stützwinde bei fahrender Sattelzugmaschine detektiert und durch entsprechende Ansteuerung des Motors rückgängig gemacht werden, ohne daß hierzu ein Stopp des Sattelzuges erforderlich ist. Wird andererseits der elektronische Endanschlag errreicht, ohne daß vorher ein Bodenkontakt detektiert wird, so kann das Abkoppeln verhindert werden, um ein Herabfallen des Sattelaufliegers bis zum Bodenkontakt zu vermeiden. Derartige Situationen können sich beispielsweise ergeben, wenn die Hinterachse der Zugmaschine und damit die Sattelplatte infolge Bodenunebenheiten verhältnismäßig hoch liegen, der Auftreffbereich für die Stützwinden dagegen sehr niedrig ist.

Schließlich ist es durch eine entsprechende Kommunikation zwischen der Steuer- und Regeleinheit und der Sattelkupplung möglich, den Auf- und Absattelvorgang komplett zu automatisieren, indem eine entsprechende Funktionsabfolge programmiert wird und die Signale des erfindungsgemäß vorgesehenen Signalgebers mit den Signalen anderer Überwachungseinrichtungen zur Steuerung des Funktionsprogrammes ausgenutzt werden.

Weitere Einzelheiten werden anhand des in den Figuren 1 bis 3 schematisch dargestellten Ausführungsbeispieles näher erläutert. Es zeigen
- Fig. 1: einen Motor mit Prozessor,
- Fig. 2: eine Signalabfolge entsprechend einer Soll-Kurve,
- Fig. 3: eine Signalabfolge entsprechend einer Ist-Kurve.

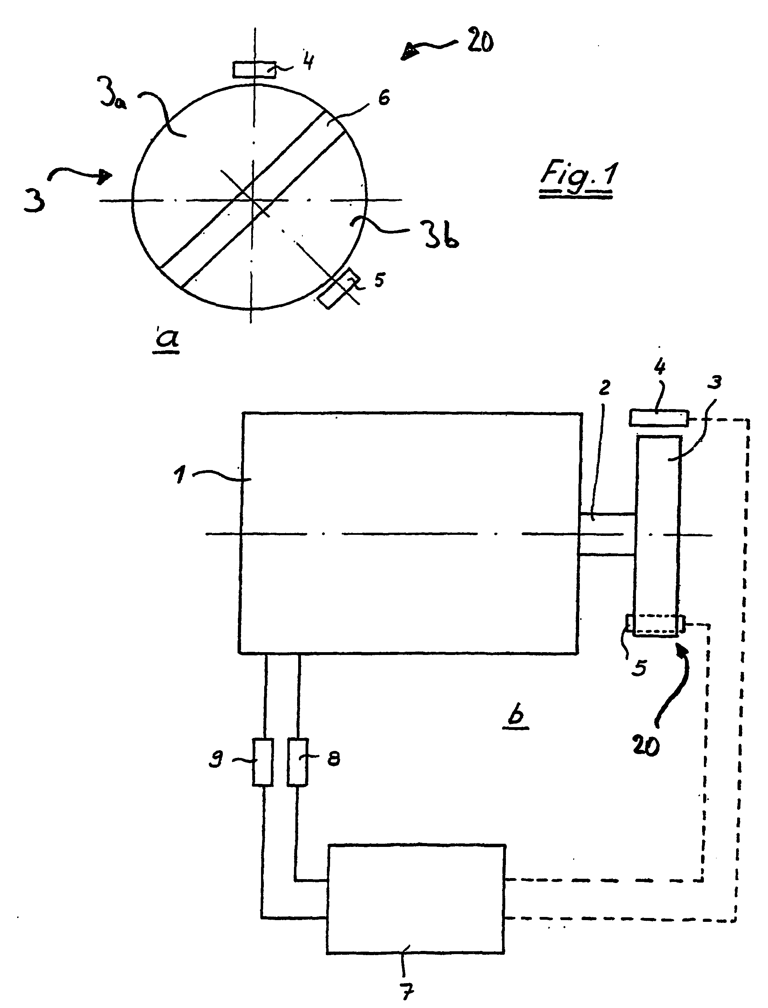

Bei dem in Fig. 1 schematisch dargestellten Ausführungsbeispiel ist ein Motor mit 1 und dessen Welle mit 2 bezeichnet, wobei es sich um die Motorwelle selbst, die Ausgangswelle des Getriebes oder eine andere Welle im Antriebsstrang handeln kann. Auf der Welle 2 ist ein Geber 3 in Form einer Scheibe angeordnet, die aus zwei etwa halbkreisförmigen ferromagnetischen Teilen besteht, die durch einen magnetischen Isolator 6 voneinander getrennt sind (Fig. 1a). In geringem radialen Abstand zum äußeren Umfang des Gebers 3 sind zwei gleichartige Sensoren 4 und 5 angeordnet, die bei einer Drehung des Gebers 3 zusammen mit der Welle 2 zur Abgabe eines Signals angeregt werden. Beide Sensoren 4,5 erzeugen so periodisch wiederkehrende Signale, deren periodische Abfolge der Drehzahl der Welle 2 entspricht. Wie aus Fig. 1a ersichtlich, sind die Sensoren 4 und 5 zum Umfang des Gebers 3 asymmetrisch verteilt, wodurch sich eine Phasenverschiebung der Signalabfolge des Sensors 4 zur Signalabfolge des Sensors 5 ergibt, die zur Bestimmung der Drehrichtung der Welle 2 benutzt wird. Die von den Sensoren 4 und 5 erzeugten Signale werden einem Prozessor 7 mit Rechner und Datenspeicher zugeführt, der zur Verarbeitung und Bewertung der Signale sowie zur Ausgabe von Steuerbefehlen für den Motor 1 programmiert ist. Die Steuerbefehle werden über die Relais 8 und 9 an den Motor 1 weitergegeben.

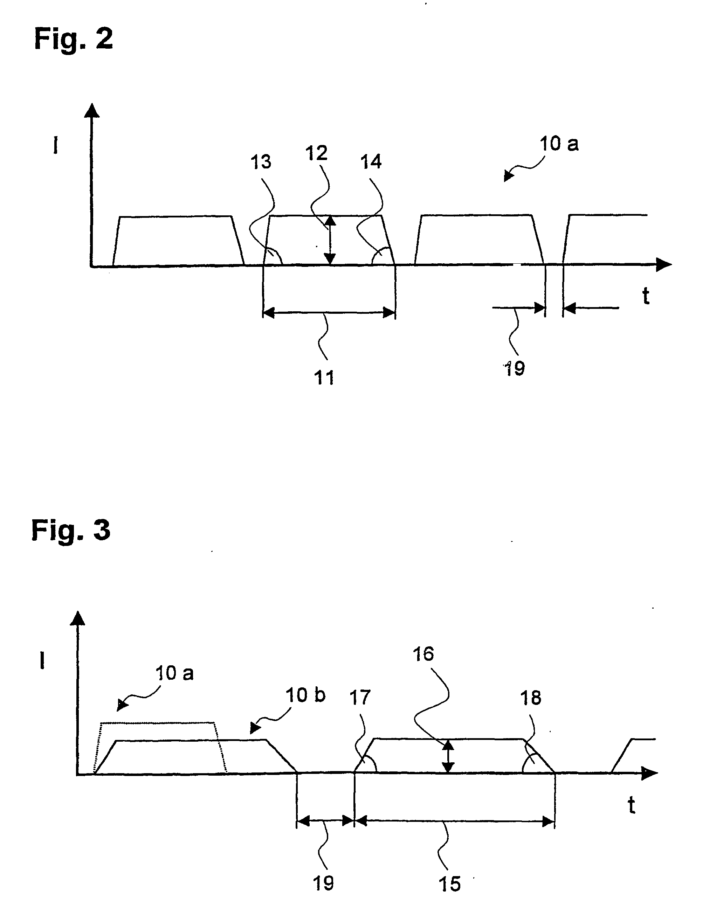

In Fig. 2 ist eine Abfolge von hinsichtlich ihrer Form idealisierten Signalen über der Zeitachse t dargestellt, die unter bestimmten vorgegebenen Betriebsbedingungen aufgenommen wurde und als Referenzwert bzw. Soll-Kurve im Datenspeicher des Prozessors 7 abgelegt werden kann. Der von den Sensoren als Signal abgegebene Strom fällt periodisch auf Null ab. In diesem Abschnitt durchläuft der Isolator 6 den betrachteten Sensor 4,5. Nach dem Erreichen des Nullwertes 19 steigt das Signal unter einem Flankenwinkel 13 auf die Signalhöhe 12 an und wird über ein Zeitintervall, in welchem eine der halbkreisförmigen Scheiben 3a,3b des Gebers 3 an einem der Sensoren 4,5 vorbeiläuft und einen Strom induziert, gehalten. Bei Eintritt des Isolators 6 in den Meßbereich eines der Sensoren 4,5 beginnt sich das elektromagnetische Feld unter dem Flankenwinkel 14 abzubauen, bis erneut der Nullwert 19 erreicht ist. Die Signallänge 11 setzt sich im einzelnen aus der Länge der Flankenwinkel 13,14 und der Länge der Signalhöhe 12 zusammen. Phasengleiche Abschnitte der Sollwertkurve weisen für gleiche Zeitintervalle gleiche Veränderungen des Signalwertes auf.

Angenommen, die in Fig. 2 dargestellte Sollwertkurve basiert auf den vom Sensor 4 erzeugten Signalen, dann würde die vom Sensor 5 erzeugte Sollkurve gegenüber der dargestellten unter Berücksichtigung der Sensoranordnung gemäß Fig. 1a zeitlich um 135° phasenverschoben sein, wenn sich Welle 2 und Geber 3 rechtsherum drehen. Beim Linkslauf beträgt die Phasenverschiebung der Sollkurve des Sensors 5 gegenüber der Sollkurve des Sensors 4 hingegen 225°. Diese Phasenunterschiede sind durch die Anordnung der Sensoren 4 und 5 fest vorgegeben und lassen daher einen zuverlässigen Schluß auf die Drehrichtung des Motors zu.

Bei der Signalkurve gemäß Fig. 3 liegt offensichtlich eine geringere Drehzahl vor als bei der Kurve gemäß Fig. 2, woraus auf eine höhere Belastung des Motors geschlossen werden kann. Im einzelnen verläuft der Flankenwinkel 17,18 des ansteigenden bzw. abfallenden Signals der Ist-Kurve 10b flacher, die Signalhöhe 16 niedriger und die Signallänge 15 länger. Diese charakteristischen Änderungen sind auf die verringerte Drehzahl des Motors und somit auch des Gebers zurückzuführen. Als Punktlinie wurde in der Fig. 3 beispielhaft der Signalverlauf der in Fig. 2 dargestellten Soll-Kurve 10a vergleichend zum Verlauf des Signals der Ist-Kurve 10b eingezeichnet.

Bei entsprechender Programmierung des Prozessors können die Unterschiede zwischen Ist- und Soll-Kurve berechnet, Abweichungen mit vorgebbaren kritischen Differenzwerten verglichen und schließlich Steuerbefehle für den Motor 1 generiert werden.

Der Prozessor 7 kann in an sich bekannter Weise zum periodischen Selbstabgleich programmiert werden. Daneben ist es selbstverständlich auch möglich, bei Bedarf über einen Eingabebefehl neue Sollkurven produzieren zu lassen. Man kann auch gesonderte Soll-Kurven für das Ein- und Ausfahren der Stützwinde erzeugen, wenn die dabei auftretende schwerkraftbedingte unterschiedliche Belastung des Motors für die Sensibilisierung des Systems im Hinblick auf Sicherheits- und Überwachungsfunktionen von Bedeutung ist. Schließlich kann der Prozessor mit einer oder mehreren Schnittstellen ausgestattet werden, um - wie bereits dargelegt - mit anderen Systemen der Zugmaschine oder des Sattelaufliegers kommunizieren zu können.

### Bezugszeichen

- 1: Motor
- 2: Welle
- 3: Geber
- 3a: 1. halbkreisförmige Scheibe
- 3b: 2. halbkreisförmige Scheibe
- 4: Sensor
- 5: Sensor
- 6: Isolator
- 7: Steuer- und Regeleinheit
- 8: Relais
- 9: Relais
- 10a: Soll-Kurve
- 10b: Ist-Kurve
- 11: Signallänge Soll-Kurve
- 12: Signalhöhe Soll-Kurve
- 13: Flankenwinkel ansteigendes Signal Soll-Kurve
- 14: Flankenwinkel abfallendes Signal Soll-Kurve
- 15: Signallänge Ist-Kurve
- 16: Signalhöhe Ist-Kurve
- 17: Flankenwinkel ansteigendes Signal Ist-Kurve
- 18: Flankenwinkel abfallendes Signal Ist-Kurve
- 19: Nullwert
- 20: Signalerzeuger

## Patentansprüche

1. Vorrichtung zur Abstützung von Sattelaufliegern mit wenigstens einer teleskopartig ein- und ausfahrbaren Stützwinde, einem auf das lastfreie Verfahren der Stützwinde abgestimmten Motor (1) und einer Steuer- und Regeleinheit (7), die einen elektronischen Rechner und Datenspeicher umfaßt und für die Aufnahme und Verarbeitung von Signalen sowie zur Erzeugung und Ausgabe von Steuersignalen (10a, 10b) ausgebildet ist, **dadurch gekennzeichnet,**
- **daß** dem elektrischen Motor (1) ein Signalerzeuger (20) zugeordnet ist,
- **daß** der Signalerzeuger (20) an die Steuer- und Regeleinheit (7) angeschlossen ist,
- **daß** die Steuer- und Regeleinheit (7) zur Verarbeitung von Signalen des Signalerzeugers (20) derart ausgebildet ist, daß eine beim Verfahren der Stützwinde ermittelte Ist-Kurve (10b) mit einer Soll-Kurve (10a) verglichen wird, und
- **daß** die Steuer- und Regeleinheit (7) mit dem Motor (1) verbunden ist.

2. Vorrichtung nach Anspruch 1, **dadurch gekennzeichnet, daß** der Signalerzeuger (20) einen auf einer Welle (2) des Motors (1) oder eines dem Motor (1) zugeordneten Getriebes angeordneten Geber (3) mit zwei halbkreisförmig durch einen magnetischen Isolator (6) voneinander getrennte halbkreisförmige Scheiben (3a, 3b) und dazu radial beabstandet zwei induktiv arbeitende Sensoren (4,5) aufweist.

3. Vorrichtung nach einem der Ansprüche 1 oder 2, **dadurch gekennzeichnet, daß** die Steuer- und Regeleinheit (7) zum Erkennen von Veränderungen eines Flankenwinkels (17,18) und/oder Höhe (16) und/oder Länge (15) des Signals (10b) der Ist-Kurve ausgebildet ist.

4. Vorrichtung nach Anspruch 3, **dadurch gekennzeichnet, daß** die Sensoren (4,5) in Umfangsrichtung um den Geber (3) asymmetrisch verteilt angeordnet sind.

5. Vorrichtung nach einem der Ansprüche 1 bis 4, **dadurch gekennzeichnet, daß** die Stützwinde mechanische Endanschläge aufweist, zwischen denen die Soll-Kurve spezifisch für jede Stützwinde ermittelbar ist, indem die Anzahl von Signalen (10a) bis zum Stillstand des Motors (1) beim Erreichen eines oberen oder unteren Endanschlages von der Steuer- und Regeleinheit (7) gezählt und ein entsprechender Wert in dem Datenspeicher abgelegt wird.

6. Vorrichtung nach Anspruch 5, **dadurch gekennzeichnet, daß** in der Steuer- und Regeleinheit (7) aus der Soll-Kurve (10a) unter Verwendung des Wertes für den maximalen Verfahrweg elektronische Endanschläge berechenbar sind, die zum Abschalten des Motors (1) jeweils kurz vor Erreichen der mechanischen Endanschläge benutzbar sind.

7. Vorrichtung nach einem der Ansprüche 5 oder 6, **dadurch gekennzeichnet, daß** bei Erreichen des oberen Endanschlages der elektrische Motor (1) von der Steuer- und Regeleinheit (7) derart ansteuerbar ist, daß er kurz in die entgegengesetzte Laufrichtung dreht.

8. Vorrichtung nach einem der Ansprüche 1 bis 7, **dadurch gekennzeichnet, daß** aus der Soll-Kurve (10a) Sicherheits- und Überlastabschaltwerte in der Steuer- und Regeleinheit (7) berechenbar und abspeicherbar sind, die zwischen dem Signal bei lastfreiem Betrieb und dem Signal beim Erreichen eines mechanischen Endanschlags liegen.

9. Vorrichtung nach einem der Ansprüche 1 bis 8, **dadurch gekennzeichnet, daß** der Steuer- und Regeleinheit (7) ein Temperatursensor zugeordnet ist, dessen Signal zur entsprechenden Veränderung der Sicherheits- und Überlastabschaltwerte nutzbar ist.

10. Vorichtung nach einem der Ansprüche 1 bis 9, **dadurch gekennzeichnet, daß** die Steuer- und Regeleinheit (7) zur Erstellung und Abspeicherung eines Betriebsprotokolls ausgestattet ist, das unter anderem zur Erfassung des Auslieferungszustandes, zur Fehlerdiagnose und zur Ausgabe von Wartungsanzeigen geeignet ist.

11. Vorrichtung nach einem der Ansprüche 1 bis 10, **dadurch gekennzeichnet, daß** die Steuer- und Regeleinheit (7) mit wenigstens einer Schnittstelle zur Kommunikation mit anderen Steuerungs- und Überwachungssystemen ausgestattet ist.

12. Vorrichtung nach Anspruch 11, **dadurch gekennzeichnet, daß** die Steuerund Regeleinheit (7) in Verbindung mit der Steuerungs- und Überwachungseinrichtung der Kupplung zwischen Sattelauflieger und Zugmaschine für das automatische An- und Abkoppeln ausgelegt ist.

## Claims

1. Apparatus for the support of semitrailers with at least one telescopically retractable and extensible landing gear, a motor (1) suited to the load-free moving of the landing gear and an automatic control unit (7), which comprises an electronic computer and data memory and is designed for the receiving and processing of signals as well as for the generation and output of control signals (10a,10b), **characterised in that**
- a signal generator (20) is assigned to the electric motor (1),
- the signal generator (20) is connected to the automatic control unit (7),
- the automatic control unit (7) is designed for the processing of signals of the signal generator (20) in such a manner that an actual curve (10b) determined during the moving of the landing gear is compared with a target curve (10a), and
- the automatic control unit (7) is connected to the motor (1 ).

2. Apparatus according to claim 1, **characterised in that** the signal generator (20) has a transmitter (3) which is provided on a shaft (2) of the motor (1) or on a transmission assigned to the motor (1) and which has two semicircular plates (3a, 3b) semicircularly separated from each other by a magnetic insulator (6) and two inductively functioning sensors (4,5) at a radial spacing therefrom.

3. Apparatus according to one of claims 1 or 2, **characterised in that** the automatic control unit (7) is designed for the identification of changes in a flank angle (17,18) and/or height (16) and/or length (15) of the signal (10b) of the actual curve.

4. Apparatus according to claim 3, **characterised in that** the sensors (4,5) are arranged asymmetrically distributed circumferentially around the transmitter (3).

5. Apparatus according to one of claims 1 to 4, **characterised in that** the landing gear has mechanical limit stops between which the target curve is specifically determinable for each landing gear, the number of signals (10a) to standstill of the motor (1) when reaching an upper or lower limit stop being counted by the automatic control unit (7) and a corresponding value being stored in the data memory.

6. Apparatus according to claim 5, **characterised in that** in the automatic control unit (7) from the target curve (10a), using the value for the maximum travel path, electronic limit stops can be calculated which can be used to stop the motor (1) in each case shortly before the mechanical limit stops are reached.

7. Apparatus according to one of claims 5 or 6, **characterised in that** when the upper limit stop is reached the electric motor (1) is controllable by the automatic control unit (7) in such a manner that it turns briefly in the opposite sense.

8. Apparatus according to one of claims 1 to 7, **characterised in that** from the target curve (10a) safety- and overload-switch-off values can be calculated and stored in the automatic control unit (7), which lie between the signal on load-free operation and the signal on reaching a mechanical limit stop.

9. Apparatus according to one of claims 1 to 8, **characterised in that** the automatic control unit (7) has allocated to it a temperature sensor, the signal of which can be used for the corresponding alteration of the safety- and overload- switch-off values.

10. Apparatus according to one of claims 1 to 9, **characterised in that** the automatic control unit (7) is equipped for creation and storage of an operating protocol, which among other things is suitable for the recording of the delivery condition, for fault diagnosis and for the output of maintenance indications.

11. Apparatus according to one of claims 1 to 10, **characterised in that** the automatic control unit (7) is provided with at least one interface for communication with other control and monitoring systems.

12. Apparatus according to claim 11, **characterised in that** the automatic control unit (7) in conjunction with the control and monitoring device of the coupling between semitrailer and tractor is designed for automatic coupling and decoupling.

## Revendications

1. Dispositif d'appui de semi-remorques comprenant au moins un treuil de support pouvant être rentré et déployé de manière télescopique, un moteur (1) adapté au déplacement exempt de charge du treuil de support et une unité de commande et de contrôle (7), qui comprend un calculateur électronique et une mémoire d'informations et est conçue pour la réception et le traitement de signaux ainsi que pour la génération et la délivrance de signaux de commande (10a, 10b), **caractérisé en ce que**
- un générateur de signaux (20) est associé au moteur électrique (1),
- le générateur de signaux (20) est raccordé à l'unité de commande et de contrôle (7),
- l'unité de commande et de contrôle (7) destinée au traitement des signaux du générateur de signaux (20) est conçue de telle sorte qu'une courbe effective (10b) déterminée lors du déplacement du treuil de support est comparée à une courbe théorique (10a),
- l'unité de commande et de contrôle (7) est reliée au moteur (1).

2. Dispositif selon la revendication 1, **caractérisé en ce que** le générateur de signaux (20) comprend un transmetteur (3) disposé sur un arbre (2) du moteur (1) ou d'une transmission associée au moteur (1) comprenant deux disques (3a, 3b) en forme de demi-cercle séparés l'un de l'autre en forme de demi-cercle par un isolateur magnétique (6) et deux capteurs (4, 5) fonctionnant de façon inductive en étant radialement écartés.

3. Dispositif selon l'une des revendications 1 ou 2, **caractérisé en ce que** l'unité de commande et de contrôle (7) est conçue pour détecter des modifications d'un angle du filet (17, 18) et/ou la hauteur (16) et/ou la longueur (15) du signal (10b) de la courbe effective.

4. Dispositif selon la revendication 3, **caractérisé en ce que** les capteurs (4, 5) sont disposés en étant répartis de façon asymétrique dans la direction circonférentielle autour du transmetteur (3).

5. Dispositif selon l'une des revendications 1 à 4, **caractérisé en ce que** le treuil de support comprend des butées mécaniques, entre lesquelles peut être déterminée la courbe théorique de façon spécifique pour chaque treuil de support, **en ce que** le nombre de signaux (10a) est calculé par l'unité de commande et de contrôlé (7) jusqu'à ce que le moteur (1) s'arrête lorsqu'il a atteint une butée supérieure ou inférieure et qu'une valeur correspondante est placée dans la mémoire d'informations.

6. Dispositif selon la revendication 5, **caractérisé en ce que** des butées électroniques peuvent être calculées dans l'unité de commande et de contrôle (7) à partir de la courbe théorique (10a) en utilisant la valeur du trajet de déplacement maximal, lesquelles butées peuvent être utilisées pour arrêter le moteur (1) respectivement peu de temps avant qu'il ait atteint les butées mécaniques.

7. Dispositif selon l'une des revendications 5 ou 6, **caractérisé en ce que** lorsque le moteur électronique (1) a atteint la butée supérieure, il peut être commandé par l'unité de commande et de contrôle (7) de telle sorte qu'il tourne brièvement dans le sens de marche opposé.

8. Dispositif selon l'une des revendications 1 à 7, **caractérisé en ce que** des valeurs de sécurité et d'arrêt de surcharge peuvent être calculées et mémorisées dans l'unité de commande et de contrôle (7) à partir de la courbe théorique (10a), lesquelles valeurs se situent entre le signal dans le cas d'un fonctionnement exempt de charge et le signal qu'une butée mécanique est atteinte.

9. Dispositif selon l'une des revendications 1 à 8, **caractérisé en ce qu'**à l'unité de commande et de contrôle (7) est associé un capteur de température, dont le signal peut être utilisé pour modifier de façon correspondante les valeurs d'arrêt de sécurité et de surcharge.

10. Dispositif selon l'une des revendications 1 à 9, **caractérisé en ce que** l'unité de commande et de contrôle (7) est équipée pour établir et mémoriser un rapport d'exploitation, qui convient entre autres pour la détection de l'état de distribution, pour le diagnostique d'erreurs et pour la délivrance d'indications d'entretien.

11. Dispositif selon l'une des revendications 1 à 10, **caractérisé en ce que** l'unité de commande et de contrôle (7) est équipée au moins d'une interface destinée à communiquer avec d'autres systèmes de commande et de surveillance.

12. Dispositif selon la revendication 11, **caractérisé en ce que** l'unité de commande et de contrôle (7) est dimensionnée en liaison avec le dispositif de commande et de surveillance du couplage entre la semi-remorque et le tracteur pour le couplage et le découplage automatique.
